# EUROPEAN PATENT SPECIFICATION

(11) **EP 3 289 257 B1**
(45) Date of publication and mention of the grant of the patent: **17.06.2020**
(21) Application number: 16722944.2
(22) Date of filing: 20.04.2016
(51) Int. Cl.: F16K 17/16

(54) **SAFETY DEVICE FOR PIPELINES WITH IMPROVED RESISTANCE TO PETALS DETACHMENT**
SICHERHEITSVORRICHTUNG FÜR ROHRLEITUNGEN MIT VERBESSERTEM WIDERSTAND GEGEN DIE ABLÖSUNG VON PETALS
DISPOSITIF DE SÉCURITÉ POUR CANALISATIONS DOTÉ D'UNE RÉSISTANCE AMÉLIORÉE AU DÉTACHEMENT DE PÉTALES

(30) Priority: 28.04.2015 IT MI20150597
(43) Date of publication of application: 07.03.2018
(73) Proprietor: Donadon Safety Discs and Devices S.R.L., 20011 Corbetta (MI) (IT)
(72) Inventor: BOSISIO, Lauro, 20162 Milano (IT); DONADON, Antonio, 20019 Settimo Milanese (Milano) (IT); MODENA, Mario, 23828 Perledo (Lecco) (IT)
(74) Representative: Zermani, Umberto
(86) International application number: PCT/IB2016/052241
(87) International publication number: WO 2016/174549

(56) References cited:
- WO-A1-2008/155783
- GB-A- 609 282
- GB-A- 2 141 177
- US-A- 3 834 580

## Description

The object of the present invention is a safety or rupture device for pipelines that is equipped with at least one sheet-like body having a pre-calculated rupture threshold (typically a disc).

More specifically, the object of the present invention is a safety device for pipelines suitable for bringing about the expulsion of a fluid from a pipeline based on a pre-established rupture threshold correlated with a maximum level of pressure exerted by this fluid, comprising a rupture disc with a number of petals and configured to achieve markedly improved resistance to petal detachment, with respect to known safety devices.

In particular, the present invention is advantageously used in the production of safety devices applied to systems along pneumatic or hydraulic lines, to ensure the necessary safety measures of the system, which can undergo conditions differing from those for which it was designed.

More specifically, these devices are applied to emergency lines in order to completely close the conduit on which they are applied and they comprise at least one rupture disc.

A high-pressure fluid acts within one of the half-spaces defined by the device, whereas a lower pressure, for example atmospheric pressure, acts on the opposite half-space.

Alternatively, these safety devices can protect systems that operate at subatmospheric pressure. In this case as well, the device is subjected to a difference in pressure that acts between the two half-spaces defined by the device.

For example, when the difference between the pressure acting within the system and the external pressure exceeds a pre-calculated safety threshold value, the rupture disc splits open, so as to enable the pressurized fluid to exit the system passing through the rupture disc that is in the discharge configuration. In this manner, possible undesired excess pressure cannot damage other parts of the system.

To perform this discharge function, safety discs comprise a rupture portion on at least one surface of which the pressure of the fluid acts, said pressure being that which one wishes to contain within a certain limit, precisely so as to avoid damage to the system. In particular, the rupture portion can be flat, concave or convex.

These discs are usually circular in shape, but alternatively they can also be of a different shape, for example square-shaped or rectangular, depending upon the conduit or pipeline on which they need to be applied.

Discs that do not have any pre-established frangible lines open in an undefined manner with possible separation of some parts.

For this reason, in many cases, preferably discs with pre-established frangible lines are used. The frangible lines typically define one or more petals that are suitable for opening so as to define a passage or discharge section for the fluid contained in the pipeline.

The set of petals virtually defines the rupture portion, which is part of the rupture disc itself.

The frangible lines are obtained by means of cuts, which can be through or non-through cuts.

In the case of through cuts, a second continuous layer that ensures pneumatic and/or hydraulic sealing is needed. This is not necessary in the case of non-through cuts.

In other words, the cuts can be defined by a plurality of non-through cuts, arranged on a surface of the rupture disc according to a suitable configuration, in such a manner as to define corresponding pre-established frangible lines.

In the methods for making these discs, execution of the non-through incisions or cuts, requires particular attention in terms of depth, length and width, but also as concerns maintaining the mechanical characteristics of the rupture disc material near the cuts. In particular, the crystalline-metallurgical structure of the material needs to remain unaltered.

In fact, the dimensions of the cuts are selected as a function of the pre-established pressure threshold value at which the disc must break. Undesirable mechanical alterations and/or alterations of the crystalline structure, which are also difficult to evaluate, can modify the rupture threshold value of the rupture disc. In this case, the rupture disc, which is also called a safety disc, begins to operate before or after this value is reached.

The methods with the highest performances for realizing non-through incisions on rupture discs, without jeopardizing the crystalline structure thereof, comprise the use of high-frequency lasers and they have been developed by the Applicant in recent years.

Examples of these methods and the devices capable of implementing such methods are known from the international patents WO2008/155783 and WO2013/014614 also filed by Donadon SDD S.r.l. Further safety devices relevant to the subject-matter of claim 1 are known from GB 2 141 177 A and US 3 834 580 A.

In particular, the cuts are generally defined by radial through-cuts through the centre, which define a plurality of rupture petals or rupture sections of the disc.

In other words, when the threshold value of the pressure exerted by the fluid is exceeded, the safety disc splits open at said pre-established frangible lines and the petals detach from each other, turning in the direction of the "relief" of the fluid.

Note that for the purposes of structural symmetry, the distribution of stresses and production simplicity, the rupture portion generally has a preferential outline that is at least partially curved and preferably circular. Each one of the petals, which belong to the rupture portion, thus comprises a base corresponding to a sector or arc of the circle that is in turn defined by the outline of the rupture portion. Each one of the petals also usually has a vertex virtually in common with the other petals, and that, projected on a plane perpendicular to a central axis of the safety device, is found at the centre of this circle.

The rupturing of the rupture disc and thus the separation of the petals from each other, which usually takes place starting from the common vertex of the petals and along the frangible lines, can cause excessive deformation of one or more petals, particularly when the petal tends to lift its outermost part as well, which is located in proximity to its curved base. Such deformation can cause breakage of the individual petal and relative undesired detachment from the remaining part of the rupture disc.

In fact, this outermost part of the petal can be subjected to marked stress, which can thus lead to breakage of the petal. Detachment of the petal can damage other components of the system, and specifically, it can impair the operation of valves or other auxiliary elements operating downstream of the safety device.

An aim of the present invention is to develop a safety device for pipelines, comprising a rupture disc with a number of petals, and by means of which improved breakage resistance of each individual petal is achieved, so as to reduce the risk of petal detachment, with respect to currently known systems.

As yet, shock-absorbing systems that are quite complex have been developed, particularly for rupture discs that only have one petal.

Another aim of the present invention is to develop a safety device for pipelines, comprising a structurally simple rupture disc with a number of petals, and by means of which improved breakage resistance of each individual petal is achieved, so as to reduce the risk of petal detachment, with respect to currently known systems.

These aims are achieved by means of a safety device for pipelines, according to claim 1.

A possible embodiment of the present invention can exhibit at least one of the following technical aspects.

Preferably, the central opening is defined by a number of sides equal to the number of petals, although in a possible embodiment of the present invention, this number of sides could also exceed the number of petals. Preferably, these sides are at least partially rectilinear.

Preferably, the rupture portion and the central opening at least partially face each other, and are apt for being positioned at least in part transversely to said pipeline.

In other words, at least part of the central opening of the support overlaps, and in a certain sense it is suitable for covering, at least part of the rupture portion of the rupture disc.

Preferably, the central opening defines a central axis suitable for being arranged along said pipeline.

In a closed state of the device, the projection of an outline of the central opening on a projection plane perpendicular to said central axis is at least partly situated within the projection of an outline of the rupture portion on the same projection plane.

Preferably, in said closed state of said device, said projection of said outline of said central opening on said projection plane defines an internal area smaller than that defined by said projection of said outline of said rupture portion on the same projection plane.

In this manner, the sides of the central opening can interfere with the opening movement of the petals, before the same petals reach an angle of rotation that is too large, which could determine excessive deformation and thus breakage of the petals.

Preferably, in said closed state of said device, said projection of this outline of said central opening on said projection plane is inscribed in said projection of this outline of said rupture portion on the same projection plane.

Preferably, said projection of said outline of said rupture portion comprises a circle.

Preferably, said projection of this outline of said central opening comprises a polygon inscribed in said circle.

Considering the projections of the petals on this projection plane, the same petals initially tend to open in the form of a polygon inscribed in the outline of the circumference of the rupture portion, and each petal virtually corresponds to one side of this polygon. In the absence of the support, the same petals also tend to open beyond this polygon, in the sense that each petal tends to be lifted also at the part of the petal that proves to be encompassed between the respective side of the polygon and the arc of the circle that functions as the base for the petal and that belongs to the outline of the rupture portion.

In other words, at least one petal deformation component, which could cause it to break, results from the tendency of the petal to rise also in the part thereof interposed between said side of the polygon and this arc of a circle.

As regards the polygon described in the central opening, particularly if the number of sides of this polygon is equal to the number of petals and the polygon itself is virtually inscribed in the outline of the rupture portion, the size of the discharge section can be optimized according to needs concerning the protection, support and detachment resistance of the petals. Preferably, in said closed state of said device, said rupture portion is suitable for being interposed between the fluid in said pipeline and said support.

Preferably, in said closed state of said device, the petals are joined to each other and converge towards said central axis.

When the pressure reaches a pre-established value, the rupture portion breaks and the petals separate from each other. Considering a middle section of the pipeline at which the rupture disc is positioned, as the petals open, they turn at least about an axis that proves to be parallel to this middle section. The turning of the petals acts in such a manner that the vertices, which were previously joined at the centre of the rupture portion, move towards the support. These petals thus come into contact with the sides of the central opening and are positioned at least partially through the central opening afforded in the support.

Preferably, the support comprises at least one face that is transverse with respect to said central axis and faces said rupture disc, and faces that are longitudinal with respect to said central axis and define the sides of said opening, respectively; each longitudinal face being at least partly connected to said transverse face by means of at least one respective curved section. Preferably, in said closed state of the device, each petal is associated with a respective side of said central opening, and delimited laterally by at least two frangible lines, each of which extending from an intersection point to a terminal end portion.

Preferably, each side of said central opening extends substantially between the two respective terminal end portions of the at least two frangible lines delimiting the respective petal.

Preferably, in said closed state of said device, the rupture disc comprises a peripheral portion positioned around said rupture portion, and that is preferentially ring-shaped.

Preferably, in said closed state of said device, the rupture portion is at least partially concave, and preferentially dome-shaped.

Preferably, in said closed state of said device, the support abuts against said peripheral portion of said rupture disc.

Preferably, the support is ring- and/or disc-shaped.

Preferably, in said closed state of said device, said rupture portion is suitable for being interposed between the fluid in said pipeline and said support.

Preferably, in said closed state of said device, the concavity of said rupture portion at least partially faces said support.

In particular, in said closed state of said device, the concave part of the rupture portion faces at least prevalently the support.

In this manner, the rupture disc is a "reverse-acting" disc.

Preferably, the safety device comprises constraining means configured to tighten together said support and disc.

The constraining means preferably comprises at least a pair of flanges. Preferably, the support is incorporated in at least one of said flanges. Preferably, said sides of said central opening of the support are connected to each other by means of curved sections.

The curvature of the connections between the sides of the central opening reduces the concentration of stresses that would be created across the borderline between two angularly consecutive petals.

Preferably, in said closed state of said device, the rupture portion and the central opening exhibit axisymmetric geometry.

Preferably, in said closed state of said device, the rupture portion and the central opening are arranged coaxially with respect to each other.

According to another aspect, the present invention concerns a pipeline or conduit for fluids under pressure or negative pressure, in which said pipeline or conduit has at least one safety device that has one or more of the preceding characteristics and that is mounted on the pipeline or conduit. The characteristics of the present invention shall be further clarified in the following detailed description provided by way of non-limiting example of the more general concepts claimed.

The following detailed description refers to the attached figures, of which:
- Figure 1 is a partially sectioned view of a possible embodiment of the present invention mounted on a pipeline, in a closed operative state.
- Figure 2 is a partially sectioned view of this embodiment, in a discharge operative state.
- Figure 3 is a top view of part of this embodiment in said closed state, taken along section 3-3 of Figure 2.
- Figure 4 is an enlargement of a part of Figure 3.

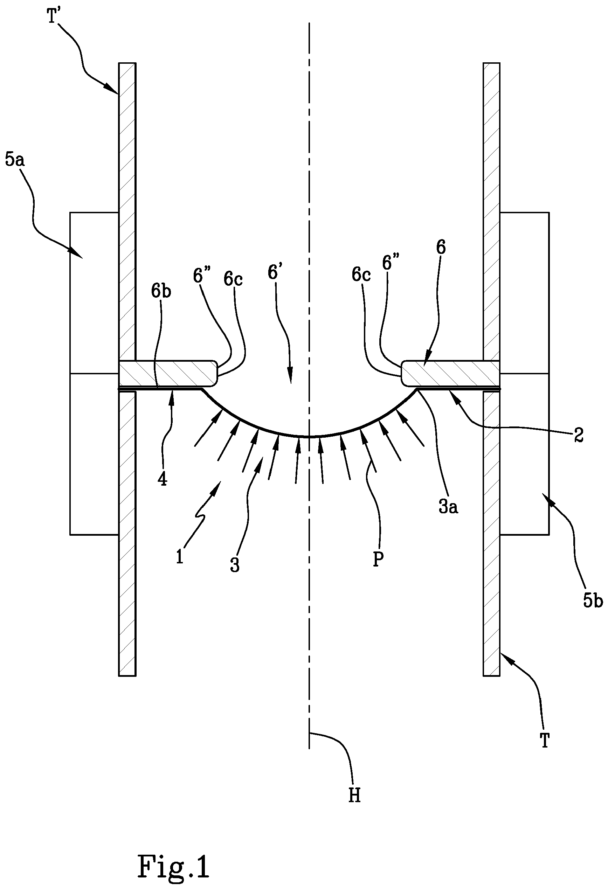

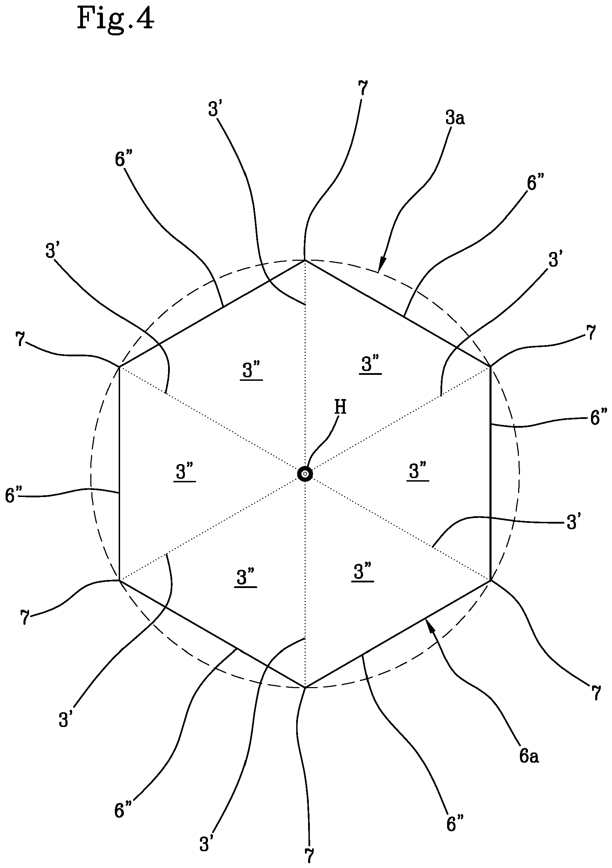

A first embodiment of a safety device 1 according to the present invention is shown in Figure 1 mounted on a main pipeline or conduit T, which for example is part of a system. The device 1 comprises a rupture disc 2 shaped so as to be arranged along the main pipeline T. The rupture disc 2 has a rupture portion 3, in which a number of frangible lines 3' are defined. These frangible lines 3' appear as broken lines in Figure 4.

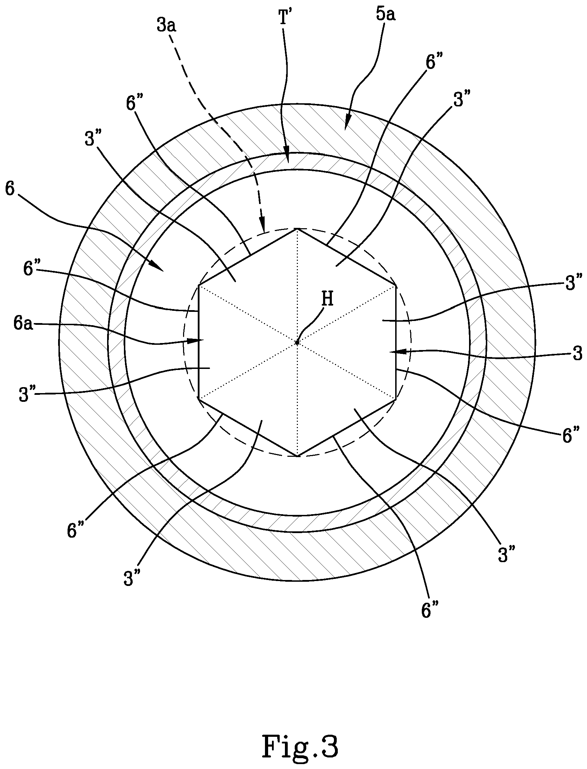

The frangible lines 3' are indicated only in Figure 4 for the sake of clarity, but they are also visible in Figure 3.

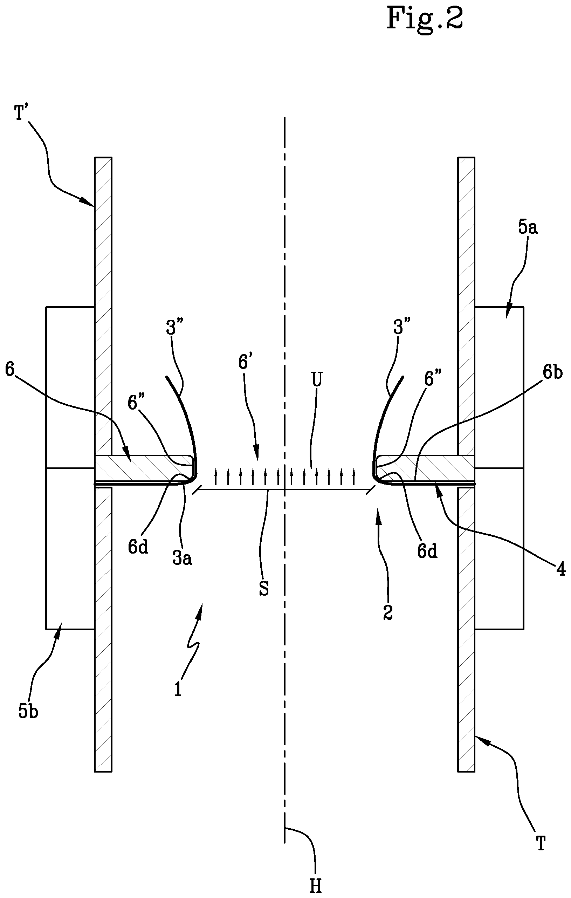

The rupture portion 3 is delimited by an outline 3a, seen from above in Figures 3 and 4. The outline 3a intersects the planes of Figures 1 and 2. For simplicity's sake, in Figures 1 and 2, only one of the two points of intersection of the outline 3a with the respective planes of Figures 1 and 2 is indicated.

The rupture portion 3 is dimensioned so as to occlude this pipeline T, for example when a fluid exerting pressure is present in this pipeline T. The action of this pressure is identified by the arrows P in Figure 1.

As is observable particularly in Figure 4, the frangible lines 3' define a plurality of petals 3".

The frangible lines 3' are dimensioned so as to split open, and the petals 3" are adapted for opening along these frangible lines 3', so that the device changes from a closed state as shown in Figure 1, to a discharge state as shown in Figure 2. It can be stated that the device 1 takes on a discharge state even when the rupture portion 3 begins to split and open, even if in the example shown the discharge state is that in which the rupture portion 3 is virtually completely open.

In this discharge state, the fluid coming from the main pipeline T exits, passing through the discharge section S, for example following the arrows U shown in Figure 2. The discharge section S is defined by the opening of the petals 3", as shown in Figure 2.

Therefore, in the state of use shown in the attached figures, when the safety device 1 is in the discharge state, the pipeline T is in fluid-dynamic communication with a discharge or relief pipeline T'. However, this discharge pipeline T' could also serve another function, beyond or as an alternative to channelling the fluid to a drain of any sort.

As can be seen in Figure 4, in the embodiment shown and solely by way of non-limiting example, the frangible lines 3' define six petals 3", although this number can differ in other possible embodiments.

The rupture portion 3 is advantageously at least partially concave and in the embodiment shown it is dome-shaped.

The rupture disc 2 is kept in position by constraining means, which in this embodiment comprises at least a pair of flanges 5a and 5b, which, in the state of use shown in the figures, are located around and astride the borderline area between the main pipeline T and the discharge pipeline T'. The safety device 1 comprises a support 6 that has a central opening 6' delimited by a number of sides 6" at least equal to the number of petals 3" in the rupture portion 3.The support 6 at least partly faces the rupture disc 2.

The support 6 is advantageously located in proximity to the rupture disc 2, and preferably immediately downstream of the rupture disc 2.

It can be stated that in the state of use appearing in the attached figures, the support 6 is installed externally of the main pipeline T, at least with respect to the rupture portion 3 of the rupture disc 2.In fact, the volume defined by the main pipeline T can be considered as delimited by the rupture disc, in the closed state of the safety device 1.

In the embodiment shown, the rupture portion 3 and the central opening 6' at least partially face each other. Moreover, said rupture portion 3 and central opening 6' are positioned at least in part transversely to an axis of extension of the main pipeline T.

In the state of use shown in the attached figures and in the closed state of the device 1, the rupture portion 3 is interposed between the fluid in the main pipeline T and the support 6.

With respect to said rupture disc 2, the support 6 is installed so that each one of the petals 3" is apt for abutting, as is observable in Figure 2, against a respective side 6"delimiting the central opening 6'.

The constraining means 5a and 5b are advantageously configured to tighten together the support 6 and the rupture disc 2, so that the support 6 stays in position with respect to the peripheral portion 4 of the rupture disc 2, even when the device 1 changes from the closed state shown in Figure 1 to the discharge state shown in Figure 2. In the embodiment shown, the support 6 advantageously abuts against the peripheral portion 4 of the rupture disc 2, although it could also be spaced away from the peripheral portion 4 of the rupture disc 2.

In another possible embodiment, the support 6 could be part of the constraining means, for example part of one of the flanges 5a or 5b, thus so as to be incorporated in at least part of said constraining means.

In the embodiment shown, the support 6, as can be observed in Figure 3, is advantageously ring-shaped, as is the peripheral portion 4 of the rupture disc 2.

As stated above, part of the rupture portion 3 is concave. The concavity of this concave part of the rupture portion 3 at least partially faces the support 6 so that in the state of use shown in the attached figures, the rupture disc 2 functions as a "reverse-acting" disc.

In particular, in the embodiment shown, the concavity of the rupture portion 3 prevalently faces the support 6.It is possible that the concavity of the rupture portion 3 entirely faces the support 6.

In any case, it should be kept in mind that for example the rupture disc 2 could also be turned by 180° with respect to Figures 1 and 2, so as to function as a "direct" or "conventional" disc.

In particular, it can be noted in Figures 1 and 2 that the central opening 6' defines a central axis H, which is suitable for being arranged along said main pipeline T. In the figures shown, the central axis H is parallel to the axis of extension of the mean pipeline T, and coincident with it.

In Figure 1 it can be observed that the support 6 has at least one transverse face 6b, which is arranged transversely with respect to the central axis H, and longitudinal faces 6c, which are arranged longitudinally with respect to the central axis H.Two longitudinal faces 6c can be seen in profile in Figures 1 and 2, but they are indicated only in Figure 1. The longitudinal faces 6c define the respective sides 6" of the central opening 6', each of which is indicated in Figures 3 and 4.

By comparing Figures 3 and 4 with Figures 1 and 2, it can be seen that each one of the longitudinal faces 6c defines a respective side 6" of the central opening 6' defined by the support 6.Only the sides 6" are indicated in Figures 3 and 4. At each one of these sides, there is a longitudinal face 6c perpendicular to the plane appearing in Figures 3 and 4.

In Figures 3 and 4, the transverse face 6b is not indicated, as in these figures another transverse face of the support 6 can be seen and it is opposite the transverse face 6b.

Therefore, the transverse face 6b indicated in Figures 1 and 2 is not visible in Figures 3 and 4 because it faces the rupture disc 2.In Figures 3 and 4 only the rupture disc 2, the support 6 and the section of the discharge pipeline T' are shown and seen from above, that is, from the support 6. Figure 4 only shows the part of Figure 3 comprising the opening 6', through which the rupture portion 3 is observable; the rupture portion 3 contains the frangible line 3', which in turn define the petals 3".Convergence of the petals 3" towards the central axis H can be observed in Figures 3 and 4. The transverse face 6b of the support 6, which is preferentially ring-shaped and facing the rupture disc 2, is connected to each one of the longitudinal faces 6c by means of a curved section 6d. In this manner, as is observable in Figure 2, the stress affecting the individual petal 3" is reduced when it comes into contact with the lower area of the support 6, at the respective side 6" of the central opening 6'.

Two curved sections 6d are indicated only in Figure 2. They connect the transverse surface 6b with the respective longitudinal surfaces 6c that define two respective sides 6", which in turn delimit the central opening 6'. As is observable particularly in Figures 3 and 4, each petal 3" is associated with a respective side 6" of the central opening 6'.Moreover, each petal 3" is laterally delimited by two frangible lines 3', each of which extending from an intersection point to a terminal end portion. In the embodiment shown, this intersection point is a point of intersection common to all the frangible lines 3' and it is identified by the line indicating the central axis H on the plane appearing in Figures 3 and 4.

Preferably, in said closed state of said device 1, the petals 3" are joined to each other and converge towards said central axis H. It can be stated that the petals 3" define the rupture portion 3.

As is observable in Figures 3 and 4, in said closed state of said device 1, the rupture portion 3 and the central opening 6' exhibit axisymmetric geometry.

As is observable in Figures 3 and 4, in said closed state of said device 1, the rupture portion 3 and the central opening 6' are arranged coaxially with respect to each other.

Considering the projections of the sides 6" and of the frangible lines 3' on a projection plane perpendicular to the axis H, such as the plane appearing in Figures 3 and 4 for example, each side 6" of the central opening 6' extends substantially between the two respective end portions of the two frangible lines 3' delimiting the respective petal 3".

In the embodiment shown, each side 6" extends between the two end points of the frangible lines 3' that define the respective petal 3".

In the embodiment shown, the central opening 6' is therefore defined by a number of sides 6" equal to the number of petals 3".In another possible embodiment of the present invention, this number of sides 6" could also differ, for example, it could exceed the number of petals 3".

These sides are advantageously at least partially rectilinear. Moreover, these sides 6" are connected to each other by means of curved sections 7, so as to reduce the stress that would be caused by cuspidal edges. In any case, in Figure 4, the curvature of the curved sections 7 is not visible, although it is present.

The central opening 6' is delimited by an outline 6a and the rupture portion is also delimited by an outline 3a.

As can be noted in Figures 3 and 4, in said closed state of said device 1, the projection of the outline 6a on the projection plane perpendicular to the axis H, is found partially within the area defined by the projection of the outline 3a on the same projection plane.

As can be noted in Figures 3 and 4, in said closed state of said device 1, the projection of the outline 6a on the projection plane perpendicular to the axis H, defines an internal area that is smaller than the area defined by the projection of the outline 3a on the same projection plane.

Therefore, the sides 6" of the central opening 6' can interfere with the opening movement of the petals 3", before the same petals 3" reach an angle of rotation that is too large, which could determine excessive deformation and thus breakage of the petals.

When the pressure P, in Figure 1, reaches a pre-established value, the rupture portion 3 breaks and the petals 3" separate from each other. Considering a middle section of the main pipeline T at which the rupture disc 2 is positioned, which in the figures is virtually a terminal section of the pipeline T, as the petals 3" open, they turn at least about an axis that proves to be parallel to this middle section. The turning of the petals 3" acts in such a manner that the vertices, which were previously joined at the centre of the rupture portion 3, move towards the support 6.These petals 3" thus come into contact with the sides 6" of the central opening 6' and are positioned at least partially through the central opening 6' afforded in the support 6, as shown in Figure 2.

Preferably, in said closed state of the device 1, the projection of this outline 6a of the central opening 6' on the projection plane perpendicular to the central axis H, is inscribed in the projection of the outline 3a of the rupture portion 3 on the same projection plane.

Preferably, said projection of the outline 3a of the rupture portion 3 comprises a circle.

Preferably, said projection of the outline 6a of the central opening 6' comprises a polygon inscribed in said circle.

At least one deformation component of the petal 3", which could cause it to break, results from the tendency of the petal 3" to rise also in the part thereof that remains encompassed between the projection, on the petal 3" itself, of the side 6" of the polygon corresponding to this petal 3", and the arc of a circle that serves as a base for the petal 3".

With a polygonal cross-section of the central opening 6', particularly if with a number of sides equal to the number of petals 3", the size of the discharge section S can be optimized according to needs concerning the protection, support and thus detachment resistance of the petals 3", precisely in relation to this tendency of the petal 3".

Note that in applications in which the section of the pipeline T downstream of the disc 2 is greater than the section downstream thereof, a device 1 according to the present invention can be installed without reducing the free flow section upstream of the disc.

In fact, in this state, the polygonal support 6, that is, the projection of the central opening 6' thereof, is inscribed in the circular section downstream of the disc 2, but it proves to be circumscribed within the circular section of the pipeline upstream of the disc 2 (that is, the one under pressure or negative pressure on which the fluid acts.

According to another aspect, the present invention concerns a pipeline or conduit T that comprises a device 1 having one or more of the described characteristics. This device 1 is mounted on the pipeline T, for example as shown in the attached figures.

The present invention achieves the proposed aims, markedly reducing the risk of petal detachment, and more generally also the risk of the petals breaking at one or more points.

The presence of a support with a through opening or central opening, particularly of a shape suitable for supporting the petals in the discharge state of the safety device, makes it possible to give the support for the petals a structural configuration suitable for limiting the overall production costs of the safety device 1, also with reference to the constraining systems between the various components of the device.

## Claims

1. A safety device (1) for pipelines, comprising:
- a rupture disc (2) shaped so as to be arranged along a pipeline (T), transversely thereto, and having a rupture portion (3) dimensioned so as to occlude said pipeline (T) and wherein a number of frangible lines (3') are defined and in turn define a plurality of petals (3"),
wherein said frangible lines (3') are dimensioned so as to split open, in a discharge state of said device (1), and said petals (3") are suitable for opening, along said frangible lines (3'), so as to define a discharge section (S) for passage of said fluid coming from said pipeline (T),
- a support (6) having a central opening (6') delimited by a number of sides (6") at least equal to the number of petals (3") and at least partly facing said rupture disc (2); said support (6) being suitable for installation in proximity to said rupture disc (2), so that each one of said petals (3") is apt for abutting, in said discharge state of said device (1), against a respective side (6") of said central opening (6')
**characterized in that** said central opening (6') defines an axis (H) suitable for being arranged along said pipeline (T) and wherein, in a closed state of said device (1), the projection of an outline (6a) of said central opening (6') on a projection plane perpendicular to said axis (H) is at least partly situated within the area defined by the projection of an outline (3a) of said rupture portion (3) on the same projection plane.

2. The device according to claim 1, wherein said rupture portion (3) and central opening (6') at least partially face each other and are apt for being positioned at least in part transversely to said pipeline (T).

3. The device (1) according to claim 1, wherein, in said closed state of said device (1), said projection of this outline (6a) of said central opening (6') on said projection plane, is inscribed in said projection of the outline (3a) of said rupture portion (3) on the same projection plane, said projection of said outline (3a) of said rupture portion (3) preferably being a circle and said projection of the outline (6a) of said central opening (6') preferably being a polygon inscribed in said circle.

4. The device according to any of the preceding claims, wherein said support (6) comprises at least one face (6b) that is transverse with respect to said central axis (H) and faces said rupture disc (2), and faces (6c) that are longitudinal with respect to said central axis (H) and define the sides (6") of said opening (6'), respectively; each longitudinal face (6c) being at least partly connected to said transverse face (6b) by means of at least one respective curved section (6d).

5. The device (1) according to one or more of the preceding claims, wherein, in said closed state of said device (1), each petal (3") is associated with a respective side (6") of said central opening (6'), and delimited laterally by at least two frangible lines (3'), each of which extending from an intersection point to a terminal end portion, each side (6") of said central opening (6') extending substantially between the two respective terminal end portions of the at least two frangible lines (3') delimiting the respective petal (3").

6. The device (1) according to one or more of the preceding claims, wherein, in the closed state of said device (1):
- said rupture disc (2) comprises a peripheral portion (4) positioned around said rupture portion (3);
- said rupture portion (3) is at least partially concave, and preferably dome-shaped;
- said support (6) abuts against said peripheral portion (4).
- said rupture portion (3) is suitable for being interposed between the fluid in said pipeline (T) and said support (6).

7. The device (1) according to claim 6, wherein, in said closed state of said device (1), the concavity of said rupture portion (3) at least partially faces said support (6).

8. The device (1) according to one or more of the preceding claims, comprising constraining means (5a, 5b) configured to tighten together said support (6) and disc (2).

9. The device (1) according to claim 8, wherein said constraining means (5a, 5b) comprises at least a pair of flanges (5a, 5b).

10. The device (1) according to claim 8 or 9, wherein said support (6) is incorporated at least in part of said constraining means.

11. The device (1) according to one or more of the preceding claims, wherein said sides (6") of said central opening (6') are connected to each other by means of curved sections (7).

12. The device according to one or more of the preceding claims, wherein, in said closed state of said device (1), said rupture portion (3) and said central opening (6') exhibit axisymmetric geometry and are arranged coaxially with respect to each other.

13. A pipeline or conduit (T) for fluids under pressure or negative pressure, wherein said pipeline or conduit (T) has at least one safety device (1) according to one or more of the preceding claims, said safety device (1) being mounted on the pipeline or conduit (T).

## Patentansprüche

1. Sicherheitsvorrichtung (1) für Rohrleitungen, umfassend:
- eine Berstscheibe (2), die durch ihre Form entlang und quer zu einer Rohrleitung (T) angeordnet werden kann und einen zum Verschließen der genannten Rohrleitung (T) dimensionierten Bruchbereich (3) aufweist und bei der eine Reihe von Bruchlinien (3') definiert sind, die wiederum eine Vielzahl von Petals (3") definieren, wobei die genannten Bruchlinien (3') so dimensioniert sind, dass sie in einem Entlastungszustand der genannten Vorrichtung (1) aufbrechen und bei der die genannten Petals (3") geeignet sind, sich entlang der genannten Bruchlinien (3') zu öffnen, um einen Entlastungsbereich (S) für den Durchgang des aus der genannten Rohrleitung (T) kommenden Betriebsmediums zu definieren,
- einen Träger (6) mit einer mittigen Öffnung (6'), der von einer Anzahl Seiten (6") begrenzt wird, die mindestens der Anzahl der Petals (3") entsprechen und mindestens teilweise der genannten Berstscheibe (2) gegenüberliegen; wobei der genannte Träger (6) geeignet ist, in der Nähe der genannten Berstscheibe (2) installiert zu werden, so dass jedes der genannten Petals (3") in der Lage ist, in dem genannten Entlastungszustand der Vorrichtung (1) gegen eine jeweilige Seite (6") der genannten mittigen Öffnung (6') anzuschlagen, **dadurch gekennzeichnet, dass** die genannte mittige Öffnung (6') eine Achse (H) definiert, die geeignet ist, entlang der genannten Rohrleitung (T) angeordnet zu werden und darin, dass in einem geschlossenen Zustand der Vorrichtung (1) die Projektion einer Außenlinie (6a) der genannten mittigen Öffnung (6') in einer Projektionsebene senkrecht zu der genannten Achse (H) mindestens teilweise in dem von der Projektion einer Außenlinie (3a) des genannten Bruchbereichs (3) derselben Projektionsebene definierten Bereich liegt.

2. Vorrichtung nach Anspruch 1, bei der der genannten Bruchbereich (3) und die genannte mittige Öffnung (6') einander mindestens teilweise gegenüberliegen und geeignet sind, mindestens teilweise quer zu der genannten Rohrleitung (T) positioniert zu werden.

3. Vorrichtung (1) nach Anspruch 1, bei der in dem genannten geschlossenen Zustand der genannten Vorrichtung (1), die genannte Projektion dieser Außenlinie (6a) der genannten zentralen Öffnung (6') in der genannte Projektionsebene in die genannte Projektion der Außenlinie (3a) des genannten Bruchbereichs (3) in derselben Projektionsebene eingeschrieben ist, wobei die genannte Projektion der genannten Außenlinie (3a) des genannten Bruchbereichs (3) vorzugsweise ein Kreis ist und die genannte Projektion der Außenlinie (6a) der genannten mittigen Öffnung (6') vorzugsweise ein in den genannten Kreis eingeschriebenes Polygon ist.

4. Vorrichtung nach einem der vorangegangenen Ansprüche, bei der der genannte Träger (6) mindestens eine Fläche (6b) umfasst, die im Verhältnis zu der genannten Mittelachse (H) in Querrichtung und der genannten Berstscheibe (2) gegenüberliegt, und Flächen (6c), die im Verhältnis zu der Mittelachse (H) in Längsrichtung liegen und jeweils Seiten (6") der genannten Öffnung (6') umfassen; wobei jede Längsfläche (6c) mittels mindestens eines entsprechenden gewölbten Bereichs (6d) mindestens teilweise mit der Querfläche (6b) verbunden ist.

5. Vorrichtung (1) nach einem oder mehreren der vorangegangenen Ansprüche, bei der in dem genannten geschlossenen Zustand der genannten Vorrichtung (1) jedes Petal (3") mit einer entsprechenden Seite (6") der genannten mittigen Öffnung (6') verbunden und seitlich durch mindestens zwei Bruchlinien (3') begrenzt wird, von denen jede von einem Schnittpunkt zu einem Endabschnitt verläuft, wobei jede Seite (6") der genannten mittigen Öffnung (6') im Wesentlichen zwischen zwei entsprechenden abschließenden Endabschnitten von mindestens zwei das entsprechende Petal (3") begrenzenden Bruchlinien (3') verläuft.

6. Vorrichtung (1) nach einem oder mehreren der vorangegangenen Ansprüche, bei der in dem geschlossenen Zustand der genannten Vorrichtung (1):
- die genannte Berstscheibe (2) einen auf dem genannten Bruchbereich (3) positionierten Außenabschnitt (4) umfasst;
- der genannte Bruchbereich (3) mindestens teilweise konkav und vorzugsweise kuppelförmig ist;
- der genannte Träger (6) gegen den genannten Außenabschnitt (4) anschlägt;
- der genannte Bruchbereich (3) geeignet ist, zwischen dem Betriebsmedium in der genannten Rohrleitung (T) und dem genannten Träger (6) eingesetzt zu werden.

7. Vorrichtung (1) nach Anspruch 6, bei der in dem genannten geschlossenen Zustand der genannten Vorrichtung (1) die Konkavität des genannten Bruchbereichs (3) mindestens teilweise dem genannten Träger (6) gegenüberliegt.

8. Vorrichtung (1) nach einem oder mehreren der vorangegangenen Ansprüche, umfassend Halteelemente (5a, 5b), die darauf ausgelegt sind, den genannten Träger (6) und die genannte Berstscheibe (2) zusammenzuhalten.

9. Vorrichtung (1) nach Anspruch 8, bei der die genannten Halteelemente (5a, 5b) mindestens ein Paar Flansche (5a, 5b) umfassen.

10. Vorrichtung (1) nach Anspruch 8 oder 9, bei der der genannte Träger (6) mindestens teilweise in die genannten Halteelemente integriert ist.

11. Vorrichtung (1) nach einem oder mehreren der vorangegangenen Ansprüche, bei der die genannten Seiten (6") der genannten mittigen Öffnung (6') miteinander durch gewölbte Abschnitte (7) verbunden sind.

12. Vorrichtung nach einem oder mehreren der vorangegangenen Abschnitte, bei der die genannte mittigen Öffnungen (6') eine axialsymmetrische Geometrie aufweisen und koaxial zueinander angeordnet sind.

13. Rohrleitung oder Leitung (T) für unter Druck oder Unterdruck stehende Flüssigkeiten, wobei die genannte Rohrleitung oder Leitung (T) mit mindestens einer Sicherheitsvorrichtung (1) nach einem oder mehreren der vorangegangenen Ansprüche ausgestattet ist, wobei die genannte Sicherheitsvorrichtung (1) auf der Rohrleitung oder Leitung (T) montiert ist.

## Revendications

1. Dispositif de sécurité (1) pour canalisations comprenant :
- un disque de rupture (2) avec une forme telle à s'adapter à une disposition le long d'une canalisation (T), de façon transversale par rapport à celle-ci, et avec une portion de rupture (3) dont les dimensions sont telles à ne pas obturer ledit pipeline (T) et dans lequel un certain nombre de lignes frangibles (3') sont définies et définissent à leur tour plusieurs pétales (3"),
dans lequel lesdites lignes frangibles (3') sont de dimensions telles à se fendre, dans un état de décharge dudit dispositif (1), et lesdites pétales (3") sont en mesure de s'ouvrir le long desdites lignes frangibles (3') de façon à définir une section de décharge (S) pour le passage dudit fluide provenant de ladite canalisation (T),
- un support (6) ayant une ouverture centrale (6') délimitée par un nombre de côtés (6") au moins égal au nombre de pétales (3") et faisant face au moins partiellement audit disque de rupture (2) ; ledit support (6) convenant à l'installation à proximité du disque de rupture (2) de sorte que chacune desdites pétales (3") est en mesure d'aller en butée, dans ledit état de décharge dudit dispositif (1), contre un côté respectif (6") de ladite ouverture centrale (6') **caractérisé en ce que** ladite ouverture centrale (6') définit un axe (H) pouvant être arrangé le long de ladite canalisation (T) et dans lequel, dans un état fermé dudit dispositif (1), la projection d'un contour (6a) de ladite ouverture centrale (6') sur un plan de projection perpendiculaire à l'axe (H) est située partiellement au moins dans la zone définie par la projection d'un contour (3a) de la portion de rupture (3) sur le même plan de projection.

2. Dispositif selon la revendication 1, dans lequel la portion de rupture (3) et l'ouverture centrale (6') font au moins partiellement face l'une à l'autre et peuvent être placées au moins en partie transversalement à ladite canalisation (T).

3. Dispositif (1) selon la revendication 1, dans lequel, dans l'état fermé dudit dispositif (1), la projection de ce contour (6a) de l'ouverture centrale (6') sur ledit plan de projection, est inscrite dans la projection du contour (3a) de la portion de rupture (3) sur le même plan de projection, ladite projection du contour (3a) de la portion de rupture (3) étant préférablement un cercle, et la projection du contour (6a) de l'ouverture centrale (6'), étant préférablement un polygone inscrit dans ledit cercle.

4. Dispositif selon l'une ou l'autre des revendications précédentes, dans lequel ledit support (6) comprend au moins une face (6b) qui est transversale par rapport audit axe central (H) et fait face au disque de rupture (2), et des faces (6c) qui sont longitudinales par rapport à ledit axe central (H) et définissent les côtés (6") de l'ouverture (6'), respectivement ; chaque face longitudinale (6c) étant au moins partiellement connectée à ladite face transversale (6b) au moyen d'au moins une section courbée respective (6d).

5. Dispositif (1) selon une ou plusieurs des revendications précédentes, dans lequel, dans ledit état fermé du dispositif (1), chaque pétale (3") est associée à un côté (6") respectif de l'ouverture centrale (6') et délimitée latéralement par au moins deux lignes frangibles (3'), chacune desquelles s'étendant d'un point d'intersection à une extrémité terminale, chaque côté (6") de l'ouverture centrale (6') s'étendant substantiellement entre les deux extrémités terminales d'au moins deux lignes frangibles (3') délimitant la pétale respective (3").

6. Dispositif (1) selon une ou plusieurs des revendications précédentes, dans lequel, dans l'état fermé du dispositif (1) :
- le disque de rupture (2) comprend une portion périphérique (4) disposée autour d'une portion de rupture (3) ;
- la partie de rupture (3) est au moins partiellement concave, et si possible en forme de dôme ;
- ledit support (6) va en butée contre ladite partie périphérique (4) ;
- ladite portion de rupture (3) peut être interposée entre le fluide dans la canalisation (T) audit support (6).

7. Dispositif (1) selon la revendication 6, dans lequel, dans l'état fermé du dispositif (1), la concavité de la portion de rupture (3) fait au moins partiellement face audit support (6).

8. Dispositif (1) selon une ou plusieurs des revendications précédentes, comprenant des moyens de contrainte (5a, 5b) configurés pour serrer ensemble ledit support (6) et ledit disque (2).

9. Dispositif (1) selon la revendication 8, dans lequel lesdits moyens de contrainte (5a, 5b) comprennent au moins une paire de brides (5a, 5b).

10. Dispositif (1) selon la revendication 8 ou 9, dans lequel ledit support (6) est incorporé au moins dans une partie desdits moyens de contrainte.

11. Dispositif (1) selon une ou plusieurs revendications précédentes, dans lequel les côtés (6") de l'ouverture centrale (6') sont raccordés les uns aux autres au moyen des sections courbées (7).

12. Dispositif selon une ou plusieurs revendications précédentes, dans lequel, dans un état de décharge dudit dispositif (1), ladite portion de rupture (3) et ladite ouverture centrale (6') présente une géométrique axisymétrique et sont arrangées de façon coaxiale entre eux.

13. Canalisation ou conduite (T) pour les liquides sous pression ou avec une pression négative, dans laquelle la canalisation ou la conduite (T) a au moins un dispositif de sécurité (1) selon une ou plusieurs des revendications précédentes, ledit dispositif de sécurité (1) étant monté sur la canalisation ou la conduite (T).
